# EUROPÄISCHE PATENTANMELDUNG

(11) **EP 2 963 600 A1**
(43) Veröffentlichungstag der Anmeldung: **06.01.2016**
(21) Anmeldenummer: 14174956.4
(22) Anmeldetag: 30.06.2014
(51) Int. Cl.: G06Q 10/08

(54) **Kommissionierverfahren**

(71) Anmelder: Berlinger, Gernot, 9220 Velden (AT)
(72) Erfinder: Berlinger, Gernot, 9220 Velden (AT)
(74) Vertreter: Schwarz & Partner

(57) **Zusammenfassung**

Die Erfindung betrifft ein Verfahren (1) zum manuellen Kommissionieren von Produkten (P1-P6) in einem Kommissionierbereich (10) gemäß einem Kommissionierauftrag (K0-K3), umfassend die folgenden Schritte:
- Ausrüsten zumindest einer Kommissionierperson (M1-M3) mit einer am Körper tragbaren Datenverarbeitungseinheit (D1-D3);
- Erfassen der Bestelldaten sämtlicher Produkte (P2, P5) eines Kommissionierauftrags (K1) in einem Zentralrechner (100);
- Übertragen der Bestelldaten vom Zentralrechner (100) an die zumindest eine Datenverarbeitungseinheit (D1-D3);
- Zuordnen einer eindeutigen Kommissionierauftragskennung (S1) zu den bestellten Produkten (P2, P5) des Kommissionierauftrags (K1);
- Maschinelles Identifizieren der bestellten Produkte (P2, P5) an einem Entnahmeplatz (E2);
- Visuelles Markieren zumindest eines bestellten Produkts (P2, P5) durch Überlagerung des bestellten Produkts (P2, P5) mit der Kommissionierauftragskennung (S1) des Kommissionierauftrags (K1) durch die Datenverarbeitungseinheit (D1-D3);
- Visuelles Markieren eines dem Kommissionierauftrag (K1) zugewiesenen Kommissionierzielgebindes (Z1), an dem die visuell markierten Produkte (P2, P5) von der zumindest einen Kommissionierperson (M1-M3) abzulegen sind.

## Beschreibung

Die Erfindung betrifft ein Kommissionierverfahren zum manuellen Kommissionieren von Produkten in einem Kommissionierbereich, insbesondere von Speise- und Getränkeprodukten in einem Produktionsbereich eines Restaurants, gemäß einem Kommissionierauftrag, sowie einen Arbeitsplatz zum manuellen Kommissionieren von Produkten.

Weltweit werden insbesondere von Gastronomiekonzernen sogenannte "Drive-in" Schnellrestaurants betrieben, bei denen Dienstleistungen angeboten werden, ohne dass der Kunde hierfür sein Auto verlassen muss. Der im deutschen Sprachraum meist verwendete Begriff "Drive-in" ist eigentlich ungenau, da man beim Besuch eines solchen Schnellrestaurants nicht "in" das Restaurant fährt, sondern eigentlich "durch" dieses hindurch. Im englischen Sprachraum lautet der entsprechende Begriff daher auch "Drivethrough" bzw. verkürzt geschrieben "Drive-Thru". Wie allgemein bekannt, bestellen, bezahlen und übernehmen bei diesen "Drive-Thru"-Schnellrestaurants die Kunden von ihrem Fahrzeug aus entlang einer Zufahrtsgasse die bestellte Ware.

Die vollständige Abwicklung von der Bestellung bis zur Übergabe der Waren erfolgt dabei je nach Fahrzeugfrequenz durch eine einzelne Person oder durch ein Team von mehreren Personen. Aus dem Stand der Technik ist derzeit bekannt, dass in "Drive-Thru"-Schnellrestaurants die Bestellungen von Mitarbeitern mit Hilfe eines Computersystems übernommen bzw. boniert werden und die Bestellungen auf Bildschirmen im Produktionsbereich angezeigt werden. Üblicherweise kommissionieren anschließend andere Mitarbeiter diese Bestellungen ohne weitere maschinelle Unterstützung. Dabei werden die bestellten Produkte anhand von den auf Bildschirmen angezeigten Bestellaufträgen manuell aus einer laufenden Speisenproduktion übernommen sowie die entsprechenden bestellten Getränke in Getränkebecher befüllt von einem Getränkeautomaten übernommen und die pro Auftrag eingesammelten Produkte in entsprechende Gebinde verpackt. Als Gebinde werden üblicherweise Papiersäcke und/oder sogenannte Trays, also vorgeformte Getränkehalterungen, in welche die Produkte bzw. Getränkebecher eingesteckt werden können, verwendet. Die Kommissionierung der bestellten Produkte erfolgt durch ständiges bzw. wiederholtes Ablesen der Bestellung von den Bildschirmen, durch Identifizieren, Memorisieren sowie gegebenenfalls Verpacken der jeweiligen Produkte. Wenn die Bestellung nach Meinung des Mitarbeiters vollständig abgearbeitet ist, werden die Gebinde mit der fertig zusammengestellten Bestellung an die in ihrem Fahrzeug wartenden Kunden übergeben. Nach erfolgter Auslieferung der Bestellung wird diese meist durch Tastendruck quittiert und verschwindet somit von den Bildschirmanzeigen im Produktionsbereich des Restaurants.

Bei hoher Fahrzeugfrequenz werden erforderlichenfalls auch zwei oder mehrere Bestellungen von den Restaurantmitarbeitern gleichzeitig bearbeitet. Zusätzlich wird die Kommissionierung der Bestellungen dadurch erschwert, dass diese meist nicht rein sequentiell abgearbeitet werden können, da nicht sämtliche bestellten Produkte zeitgleich bzw. rechtzeitig bereitstehen und daher einzelne Bestellpositionen erforderlichenfalls vorerst übersprungen werden müssen, bis die entsprechenden Produkte schlussendlich bereitgestellt sind.

Diese Bedingungen, insbesondere mehrere parallele Bestellaufträge gleichzeitig bzw. im Team gemeinsam abzuarbeiten, schaffen jedoch ein erhebliches Fehlerpotential, sodass versehentlich falsch zugeordnete Produkte in die Gebinde einer anderen Bestellung verpackt oder aber für einen Auftrag bestellte und vom Kunden bezahlte Produkte übersehen bzw. vergessen werden und diese Produkte an den Kunden somit nicht ausgeliefert werden. Da die in ihrem Fahrzeug wartenden Kunden aufgrund ihrer externen Position außerhalb des Restaurants keine sofortige Kontrollmöglichkeit der erhaltenen Lieferung haben und üblicherweise nicht jede Einzelposition der in den Gebinden tatsächlich befindlichen Produkte überprüfen, werden Fehler meist erst dann bemerkt, wenn es bereits zu spät ist und sich die Kunden nicht mehr in der Nähe des Restaurants aufhalten. Derartige Fehler beim Abarbeiten der Bestellaufträge führen - vom Restaurantbetreiber meist unbemerkt - jedenfalls zur Enttäuschung der Kunden und in weiterer Folge zu einem Imageschaden des Restaurantbetreibers.

Auch für den Restaurantbetreiber ist das derzeitige, fehleranfällige System nachteilig, da durch falsch verpackte Waren ein nicht vorhersehbarer Warenschwund auftritt, weshalb es durch die damit einhergehenden Abweichungen des Lagerbestands sowie durch Fehler in der Produktionsvorbereitung zu wirtschaftlichen Verlusten des Restaurantbetreibers kommt. Diese wirtschaftlichen Verluste werden durch den Imageschaden aufgrund von fehlerhaften Warenlieferungen noch weiter verstärkt, weshalb Gastronomiekonzerne als Betreiber bzw. als Franchisegeber solcher "Drive-Thru"-Schnellrestaurants erhöhte Ausgaben für Qualitätssicherungsmaßnahmen sowie Maßnahmen zur Kundenbindung zu tragen haben. Ebenso sind unterschiedlichste Take-away Verfahren bekannt, bei denen Kunden zu Fuß bzw. ohne eigenes Fahrzeug beispielsweise zu einem Kaffeehaus, einem Restaurant oder einem vergleichbaren Dienstleitungsunternehmen kommen, um dort Waren zu bestellen und diese zu übernehmen oder um bereits vorbestellte Waren abzuholen. Die Nachteile einer mangelnden Kontrollmöglichkeit der erhaltenen Lieferung durch den Kunden bleiben auch bei solchen Take-away Verfahren bestehen.

Es ist somit die Aufgabe der vorliegenden Erfindung ein Kommissionierverfahren bereitzustellen, das die geschilderten Nachteile des Standes der Technik vermeidet, und bei dem die einzelnen Tätigkeiten in Zusammenhang mit dem Kommissionieren und Verpacken der bestellten Produkte maschinell geführt und überwacht werden, um falsche Kommissionierungsvorgänge möglichst zu verhindern bzw. zu erkennen.

Diese Aufgabe wird bei einem Kommissionierverfahren gemäß dem Oberbegriff des Anspruchs 1 mit den Merkmalen des kennzeichnenden Teiles des Anspruchs 1 gelöst. Die Unteransprüche betreffen weitere besonders vorteilhafte Ausgestaltungen der Erfindung.

Ein erfindungsgemäßes Verfahren zum manuellen Kommissionieren von Produkten in einem Kommissionierbereich, insbesondere von Speise- und Getränkeprodukten in einem Produktionsbereich eines Restaurants, gemäß einem Kommissionierauftrag, umfasst die folgenden Schritte:
- a - Ausrüsten zumindest einer Kommissionierperson mit einer tragbaren Datenverarbeitungseinheit, welche am Körper der Kommissionierperson getragen wird;
- b - Erfassen der Bestelldaten sämtlicher Produkte eines ersten Kommissionierauftrags in einem Zentralrechner;
- c - Übertragen der Bestelldaten des ersten Kommissionierauftrags vom Zentralrechner an die zumindest eine Datenverarbeitungseinheit;
- d - Zuordnen einer eindeutigen Kommissionierauftragskennung zu den bestellten Produkten des ersten Kommissionierauftrags anhand der Bestelldaten des Zentralrechners;
- e - Maschinelles Identifizieren zumindest eines bestellten Produkts des ersten Kommissionierauftrags an einem Entnahmeplatz innerhalb des Kommissionierbereichs durch die Datenverarbeitungseinheit gegebenenfalls gemeinsam mit dem Zentralrechner anhand von voreingestellten Produktdaten und/oder von Standortdaten des Entnahmeplatzes und/oder von Bestelldaten des Zentralrechners;
- f - Visuelles Markieren zumindest eines bestellten Produkts durch Überlagerung des bestellten Produkts mit der Kommissionierauftragskennung des ersten Kommissionierauftrags durch die Datenverarbeitungseinheit;
- g - Visuelles Markieren zumindest eines dem ersten Kommissionierauftrag zugewiesenen Kommissionierzielgebindes innerhalb des Kommissionierbereichs, in welchem Kommissionierzielgebinde das zumindest eine visuell markierte bestellte Produkt von der zumindest einen Kommissionierperson abzulegen ist, mit derselben eindeutigen Kommissionierauftragskennung des ersten Kommissionierauftrags durch die Datenverarbeitungseinheit und/oder durch eine mit dem Zentralrechner gekoppelte Markierungsvorrichtung und/oder durch manuelles Anbringen der Kommissionierauftragskennung durch eine Kommissionierperson;
- h - Ablegen des zumindest einen bestellten Produkts in dem zumindest einen Kommissionierzielgebinde durch die Kommissionierperson.

Erforderlichenfalls werden die vorgenannten Verfahrensschritte:
- e - Maschinelles Identifizieren,
- f - Visuelles Markieren zumindest eines bestellten Produkts,
- g - Visuelles Markieren eines dem ersten Kommissionierauftrag zugewiesenen Kommissionierzielgebindes sowie
- h - Ablegen des zumindest einen bestellten Produkts im zugewiesenen Kommis sionierzielgebinde
zumindest teilweise für weitere bestellte Produkte des ersten Kommissionierauftrags durch eine oder mehrere Kommissionierpersonen wiederholt.

Vorteilhaft ist zumindest eine Kommissionierperson mit einer tragbaren Datenverarbeitungseinheit ausgerüstet, die am Körper der Kommissionierperson getragen wird. Eine tragbare Datenverarbeitungseinheit, die während einer Anwendung am Körper des Benutzers befestigt ist, unterscheidet sich von der Verwendung anderer mobiler Computersysteme dadurch, dass die hauptsächliche Tätigkeit des Benutzers nicht die Benutzung des Computers selbst, sondern eine durch den tragbaren Computer bzw. durch die tragbare Datenverarbeitungseinheit unterstützte Tätigkeit in der realen Welt ist.

Hier werden vorteilhaft von der tragbaren Datenverarbeitungseinheit sämtliche Tätigkeiten in Zusammenhang mit dem Kommissionieren bestellter Produkte eines Kommissionierauftrags unterstützt. Dazu werden zuerst die Bestelldaten sämtlicher Produkte eines ersten Kommissionierauftrags in einem Zentralrechner erfasst. Die Bestelldaten des ersten Kommissionierauftrags werden anschließend vom Zentralrechner an die zumindest eine Datenverarbeitungseinheit übertragen. Vorteilhaft sind beispielsweise in einem "Drive-Thru"-Schnellrestaurant oder einem Take-away-Dienstleistungsunternehmen sämtliche im Produktionsbereich tätige Mitarbeiter als Kommissionierpersonen jeweils mit einer tragbaren Datenverarbeitungseinheit ausgerüstet.

Weiters erfolgt die Zuordnung einer eindeutigen Kommissionierauftragskennung zu den bestellten Produkten des ersten Kommissionierauftrags anhand der Bestelldaten des Zentralrechners. Anschließend werden die bestellten Produkte des ersten Kommissionierauftrags durch maschinelles Identifizieren an ihrem jeweiligen Entnahmeplatz innerhalb des Kommissionierbereichs anhand von voreingestellten Produktdaten und/oder von Standortdaten des Entnahmeplatzes und/oder von Bestelldaten des Zentralrechners erfasst bzw. identifiziert. Als Produktdaten zur maschinellen Identifikation dienen beispielsweise Form, Farbe, Musterung, Struktur, Größe, Gewicht und/oder Strichcodes einer Produktverpackung, mit der das bestellte Produkt bzw. mehrere bestellte Produkte verpackt ist bzw. sind. Durch entsprechende Abfrage der Produktdaten bzw. durch Vergleich mit den Produktdaten und/oder Standortdaten und/oder Bestelldaten werden die Produkte an ihrem jeweiligen Entnahmeplatz maschinell identifiziert. Das Identifizieren der bestellten Produkte kann dabei vollständig durch die tragbare Datenverarbeitungseinheit erfolgen oder verteilt über eine tragbare Datenverarbeitungseinheit gemeinsam mit dem Zentralrechner. Das maschinelle Identifizieren kann durch die tragbare Datenverarbeitungseinheit sowohl optisch durch Bilderkennung oder beispielsweise auch durch kontaktlose Identifikation eines RFID ICs in der Produktverpackung erfolgen.

Dabei wird zumindest ein bestelltes Produkt mittels Überlagerung mit der Kommissionierauftragskennung des ersten Kommissionierauftrags durch die Datenverarbeitungseinheit visuell markiert. Weiters wird zumindest ein dem ersten Kommissionierauftrag zugewiesenes Kommissionierzielgebinde, in dem das zumindest eine visuell markierte, bestellte Produkt von der zumindest einen Kommissionierperson abzulegen ist, mit derselben eindeutigen Kommissionierauftragskennung des ersten Kommissionierauftrags durch die Datenverarbeitungseinheit und/oder durch eine mit dem Zentralrechner gekoppelte Markierungsvorrichtung visuell markiert. Je nach Anwendungsfall bzw. je nach technischer Ausstattung können im Rahmen eines erfindungsgemäßen Kommissionierverfahrens die Kommissionierzielgebinde beispielsweise auf eine oder mehrere der folgenden Arten visuell markiert werden:
- durch die Datenverarbeitungseinheit, in dem von der Datenverarbeitungseinheit ein Kommissionierzielgebinde mit der Kommissionierauftragskennung des entsprechenden Kommissionierauftrags überlagert wird;
- durch eine Markierungsvorrichtung, beispielsweise einen Drucker oder ein Etikettiergerät, mit dem die eindeutige Kommissionierauftragskennung auf das einem Kommissionierauftrag zugeordnete Kommissionierzielgebinde aufgedruckt bzw. aufgeklebt wird;
- durch manuelles Aufbringen der entsprechenden Kommissionierauftragskennung, beispielsweise durch Aufkleben eines Etiketts mit der eindeutigen Kommissionierauftragskennung, durch eine Kommissionierperson.

Als Kommissionierzielgebinde können je nach Anwendungsfall beispielsweise Tragtaschen, Säcke, Getränkehalterungen bzw. Trays, Kleinteileboxen, Tabletts und/oder vergleichbare Gebinde dienen, in welche die bestellten Produkte eines Kommissionierauftrags kommissioniert werden. Die Kommissionierzielgebinde können im Rahmen der Erfindung beispielsweise während des Abarbeitens eines Kommissionierauftrags an vordefinierten Stellplätzen innerhalb des Kommissionierbereichs aufgestellt werden, wodurch mehrere Kommissionierpersonen zeitgleich im Team bestellte Produkte in den Kommissionierzielgebinden ablegen können. Alternativ oder in Ergänzung dazu können die Kommissionierzielgebinde während des Abarbeitens eines Kommissionierauftrags ebenso von einer oder mehreren Kommissionierpersonen innerhalb des Kommissionierbereichs mitgenommen bzw. mitgetragen werden, um darin die bestellten Produkte auf kurzem Wege an den Entnahmestellen einzusammeln.

Das Ablegen des zumindest einen bestellten Produkts in dem zugewiesenen Kommissionierzielgebinde erfolgt dann durch die zumindest eine Kommissionierperson.

Vorteilhaft können die jeweils für einen Kommissionierauftrag relevanten Daten von einem Zentralrechner aus auch an mehrere tragbare Datenverarbeitungseinheiten, die jeweils von im Team arbeitenden Kommissionierpersonen getragen werden, besonders einfach und rasch übermittelt werden. Die Kommissionierpersonen werden anschließend innerhalb des Kommissionierbereichs von ihren Datenverarbeitungseinheiten mittels visueller Markierungen entsprechend geführt, wobei einerseits von den Datenverarbeitungseinheiten bestellte Produkte an ihren Entnahmeplätzen eindeutig identifiziert werden. Andrerseits wird auch ein Kommissionierzielgebinde, das einem bestimmten Kommissionierauftrag zugewiesen ist und in dem die identifizierten Produkte dieses Kommissionierauftrags abzulegen sind, durch zumindest eine der vorgenannten Varianten, beispielsweise durch die Datenverarbeitungseinheit und/oder durch eine mit dem Zentralrechner gekoppelte Markierungseinheit, visuell markiert. Zur visuellen Markierung dient jeweils eine für den jeweiligen Kommissionierauftrag eindeutige Kommissionierauftragskennung, die je nach technischer Ausstattung beispielsweise durch visuelle Überlagerung auf das Kommissionierzielgebinde projiziert, aufgedruckt und/oder aufgeklebt wird. Somit wird zuverlässig gewährleistet, dass irrtümlich falsche Zuordnungen von nicht bestellten Produkten zu einem Kommissionierauftrag vermieden werden.

Zweckmäßig werden bei einem erfindungsgemäßen Verfahren die Bestelldaten der bestellten Produkte durch die zumindest eine tragbare Datenverarbeitungseinheit und/oder den Zentralrechner überprüft, wobei
- im Falle einer richtigen Zuordnung und Ablage zumindest eines ersten bestellten Produkts im zugewiesenen Kommissionierzielgebinde erforderlichenfalls die Verfahrensschritte des maschinellen Identifizierens weiterer bestellter Produkte eines Kommissionierauftrags, des visuellen Markierens weiterer bestellter Produkte, des visuellen Markierens eines dem jeweiligen Kommissionierauftrag zugewiesenen Kommissionierzielgebindes sowie des Ablegens der weiteren bestellten Produkte im zugewiesenen Kommissionierzielgebinde durch eine Kommissionierperson entsprechend wiederholt werden,
   oder
- im Falle einer falschen Zuordnung und/oder falschen Ablage eines bestellten Produkts in einem falschen Kommissionierzielgebinde eine Fehlermeldung an die zumindest eine Datenverarbeitungseinheit gesendet wird und/oder eine visuelle Markierung des falsch zugeordneten Produkts und/oder des falschen Kommissionierzielgebindes durch die Datenverarbeitungseinheit und/oder die mit dem Zentralrechner gekoppelte Anzeigeeinheit erfolgt.

Vorteilhaft erfolgt im Rahmen eines erfindungsgemäßen Kommissionierverfahrens eine entsprechende Überprüfung der Bestelldaten der bestellten Produkte.

Besonders vorteilhaft ist bei einem erfindungsgemäßen Kommissionierverfahren, dass
- nach erfolgtem Ablegen sämtlicher bestellter Produkte eines Kommissionierauftrags im zugewiesenen Kommissionierzielgebinde der fertig abgearbeitete Kommissionierauftrag durch die tragbare Datenverarbeitungseinheit und/oder die mit dem Zentralrechner gekoppelte Anzeigeeinheit angezeigt wird, worauf
- die im zugewiesenen Kommissionierzielgebinde gesammelten Produkte ausgegeben werden, und
- gegebenenfalls der abgeschlossene Kommissionierauftrag quittiert wird.

In einer weiteren vorteilhaften Ausführung der Erfindung werden bei einem Kommissionierverfahren mehrere Kommissionieraufträge zumindest teilweise parallel von zumindest einer Kommissionierperson bearbeitet. Vorteilhaft können im Rahmen des erfindungsgemäßen Kommissionierverfahrens mehrere Kommissionieraufträge parallel von einer Kommissionierperson bzw. von mehreren Kommissionierpersonen im Team bearbeitet werden, ohne dass es zu Verwechslungen der je Kommissionierauftrag bestellten Produkte kommt. Jedem Kommissionierauftrag wird dazu eine eindeutige Kommissionierauftragskennung zugeordnet, welche Kommissionierauftragskennung sowohl zur eindeutigen visuellen Markierung der jeweils bestellten Produkte dient, als auch zur visuellen Markierung des einem Kommissionierauftrag zugeordneten Kommissionierzielgebindes dient. Somit können von einer oder auch von mehreren Kommissionierpersonen Produkte innerhalb des Kommissionierbereichs, welche von der tragbaren Datenverarbeitungseinheit identifiziert und mit einer visuellen Markierung versehen werden, jeweils ohne Verwechslungen einem bestimmten Kommissionierauftrag zugeordnet werden. Die markierten Produkte werden dazu entsprechend an ihrem Entnahmeplatz entnommen und in dem jeweiligen Kommissionierzielgebinde, welches demselben Kommissionierauftrag zugeordnet ist und ebenfalls eindeutig mit der entsprechenden Kommissionierauftragskennung markiert ist, ohne Verwechslungen abgelegt.

Zweckmäßig werden bei einem erfindungsgemäßen Kommissionierverfahren von der tragbaren Datenverarbeitungseinheit neben der Kommissionierauftragskennung zusätzliche Navigationsinformationen zum jeweils identifizierten, bestellten Produkt wie beispielsweise Informationen zur Priorität des jeweiligen Kommissionierauftrags, zur Packordnung des bestellten Produkts und/oder zur kürzesten Entfernung zum jeweiligen Entnahmeplatz eines bestellten Produkts und/oder zur kürzesten Entfernung zu dem einem bestimmten Kommissionierauftrag entsprechend zugeordneten Kommissionierzielgebinde, angezeigt. In dieser vorteilhaften Ausführung können beliebige weitere Navigationsinformationen zu einem oder zu mehreren Kommissionieraufträgen bzw. zu den entsprechenden bestellten Produkten von der tragbaren Datenverarbeitungseinheit angezeigt werden. Beispielsweise ist es im Rahmen der Erfindung möglich, dass ein Kommissionierauftrag mit hoher Priorität besonders auffällig gekennzeichnet wird, indem beispielsweise die visuelle Kennzeichnung der entsprechenden bestellten Produkte mit der eindeutigen Kommissionierauftragserkennung jeweils Blinklichtsignale mitumfasst.

In einer bevorzugten Ausführung der Erfindung wird bei einem Kommissionierverfahren von einer Kommissionierperson als tragbare Datenverarbeitungseinheit eine Datenbrille getragen, wobei von der Datenbrille jeweils eine Kommissionierauftragskennung sowie gegebenenfalls zusätzliche Navigationsinformationen zu den bestellten Produkten in ein Sichtfeld der Kommissionierperson projiziert wird bzw. werden. Eine an sich bekannte Datenbrille, die als tragbare Datenverarbeitungseinheit jeweils von den Kommissionierpersonen getragen wird, bietet den Vorteil, dass in ein Sichtfeld der Datenbrille erforderlichenfalls zahlreiche individuelle Navigationsinformationen eingeblendet werden können, welche jeweils nur von derjenigen Kommissionierperson wahrgenommen werden, welche eine entsprechende Datenbrille trägt. Mögliche Verwechslungen der visuellen Markierungen an bestellten Produkten bzw. an Kommissionierzielgebinden, welche von mehreren Kommissionierpersonen gesehen werden können, werden durch den Einsatz von Datenbrillen zuverlässig vermieden. Weiters haben Datenbrillen den Vorteil, robust zu sein und auch bei längerer Tragedauer den Träger bei seiner Arbeit weder zu behindern, noch zu gefährden.

Zusätzlich zu den tragbaren Datenverarbeitungseinheiten können je nach Bedarf von den Kommissionierpersonen weitere Kommunikations- oder Datenverarbeitungsmittel am Körper getragen werden. So ist es im Rahmen der Erfindung vorgesehen, dass beispielsweise die Kommissionierpersonen sowohl jeweils eine Datenbrille tragen, in deren Gesichtsfeld die entsprechenden visuellen Kommissionierauftragskennungen sowie gegebenenfalls weitere Navigationsinformationen eingeblendet werden, als auch zusätzlich noch eine tragbare Funk-Wechselsprecheinrichtung mit Kopfhörer und Mikrofon, ein sogenanntes Head-Set, tragen, um miteinander kommunizieren zu können bzw. um mittels der Wechselsprecheinrichtung auch akustische Anweisungen zu erhalten.

Zweckmäßig wird bei einem erfindungsgemäßen Kommissionierverfahren von der Datenbrille ein identifiziertes, bestelltes Produkt durch Überlagerung mit der Kommissionierauftragskennung des entsprechenden Kommissionierauftrags markiert.

In einer Weiterbildung der Erfindung wird bzw. werden bei einem Kommissionierverfahren von einer Kommissionierperson als tragbare Datenverarbeitungseinheit ein mobiles Computerendgerät, beispielsweise ein Tablet-Computer und/oder ein Smartphone, getragen, wobei vom mobilen Computerendgerät ein bestelltes Produkt anhand eines Bildausschnitts identifiziert und mit einer Kommissionierauftragserkennung markiert wird. Anstelle von Datenbrillen oder in Ergänzung dazu können auch Tablet-Computer und/oder Smartphones als tragbare Datenverarbeitungseinheiten dienen.

Vorteilhaft erfolgt bei einem Kommissionierverfahren gemäß der Erfindung eine Datenübertragung zwischen dem Zentralrechner und der zumindest einen tragbaren Datenverarbeitungseinheit kabellos. Diese Ausführung mit einer kabellosen Datenübertragung hat den Vorteil, dass das erfindungsgemäße Kommissionierverfahren ohne Umbauarbeiten auch in bereits bestehenden "Drive-Thru"-Restaurants jederzeit eingesetzt werden kann. Durch beispielsweise mittels Funkübertragung in einem Funknetzwerk kabellos übertragene Signale ist eine rasche und zuverlässige Datenübertragung zwischen dem Zentralrechner und den tragbaren Datenverarbeitungseinheiten gewährleistet.

In einer besonders zweckmäßigen Ausführung der Erfindung umfasst ein erfindungsgemäßes Kommissionierverfahren weiterhin zumindest eine Handerkennungseinrichtung, insbesondere zwei Handerkennungseinrichtungen, die an den Handgelenken zumindest einer Kommissionierperson befestigt ist bzw. sind, wobei beim Ergreifen eines einem Kommissionierauftrag zugeordneten, visuell markierten bestellten Produkts am entsprechenden Entnahmeplatz durch eine Kommissionierperson von einer Lageerkennungseinrichtung, welche mit dem Zentralrechner gekoppelt ist, die Lage der zumindest einen Handerkennungseinrichtung an den Handgelenken der Kommissionierperson relativ zum Entnahmeplatz des entnommenen Produkts erkannt wird und/oder beim Ablegen des Produkts in dem entsprechend zugewiesenen Kommissionierzielgebinde anhand der Lage der zumindest einen Handerkennungseinrichtung relativ zum Kommissionierzielgebinde eine Überprüfung des Kommissionierzielgebindes jedes bestellten Produkts ermöglicht wird.

Zusätzlich oder alternativ zur Handerkennung mit Handerkennungseinrichtungen kann bei einem erfindungsgemäßen Kommissionierverfahren die Handerkennung auch mittels eines Bildverarbeitungsverfahrens durchgeführt werden. Die Handerkennung mittels Bildverarbeitung kommt dabei vorzugsweise ohne zusätzliche Hardware aus. Somit stellt die Handerkennung und damit die Erkennung des Einpackvorganges jedenfalls eine wichtige Option eines erfindungsgemäßen Kommissionierverfahrens dar.

In einer zweckmäßigen Weiterbildung der Erfindung umfasst bei einem Kommissionierverfahren jede Handerkennungseinrichtung ein Sender-/Empfänger-System mit einem mobilen Datenspeicher, welcher mobile Datenspeicher mittels einer Funkverbindung berührungslos ausgelesen wird. Vorzugsweise basieren die Handerkennungseinrichtungen an den Handgelenken der Kommissionierperson auf einer RFID-Technologie. Die RFID (kurz für "Radio-Frequency IDentification") ist eine Technologie zur automatischen und berührungslosen Identifikation von Objekten mittels Sender-/Empfänger-Systemen, welche in den letzten Jahren eine große Verbreitung in zahlreichen Anwendungsgebieten gefunden hat. Es handelt sich hierbei um eine kontaktlose Kommunikationstechnik, bei der Informationen zur Identifikation beispielsweise von Gegenständen oder Lebewesen von einem Datenträger (Transponder oder TAG genannt) an ein Schreib- bzw. Lesegerät mit einer Antenne übertragen werden. Bringt man einen Transponder in die Reichweite dieser Antenne, kann man Informationen berührungslos vom Speicher des Transponders lesen oder auch Daten darauf abspeichern. Die Kopplung geschieht durch vom Schreib- bzw. Lesegerät erzeugte magnetische Wechselfelder geringer Reichweite oder durch hochfrequente Radiowellen. Damit werden nicht nur Daten übertragen, sondern auch der passive Transponder mit Energie versorgt.

In einer bevorzugten Verfahrensvariante werden bei einem erfindungsgemäßen Kommissionierverfahren zum maschinellen Identifizieren eines bestellten Produkts an einem vordefinierten Entnahmeplatz Produktdaten wie Form und/oder Farbe und/oder Muster und/oder Strichcodes einer Produktverpackung ermittelt und/oder zum maschinellen Identifizieren eines bestellten Produkts an einem belegungsabhängigen Entnahmeplatz, beispielsweise an einem Getränkeausgabeautomaten, die Produktdaten unterschiedlicher Produkte anhand der Bestelldaten des Zentralrechners ermittelt. Ebenso können beispielsweise die äußeren Abmessungen einer Produktverpackung, ihr Gewicht und/oder eine Stückzahl von Produkten, welche sich in der Produktverpackung befindet, als Produktdaten zur maschinellen Identifikation von bestellten Produkten dienen. Somit ist es im Rahmen des erfindungsgemäßen Kommissionierverfahrens möglich, unterschiedliche Produkte an vordefinierten Entnahmeplätzen eindeutig maschinell zu identifizieren. Weiters können auch unterschiedliche Produkte, welche immer an demselben Entnahmeplatz anfallen, beispielsweise Getränkebecher mit jeweils individuellem Getränkeinhalt, welche an ein und demselben Abfüllplatz eines Getränkeautomaten befüllt werden, im Rahmen des erfindungsgemäßen Kommissionierverfahrens eindeutig erkannt und einem bestimmten Kommissionierauftrag zugeordnet werden.

Zweckmäßig enthält bei einem erfindungsgemäßen Kommissionierverfahren eine für ein bestelltes Produkt eindeutige Kommissionierauftragskennung zumindest eines der folgenden charakteristischen Kennzeichen enthält:
- Farbe,
- Form,
- Kontur,
- Strichcode.

Je nach Anforderung können unterschiedliche Kennzeichen bzw. unterschiedliche graphische Merkmale, die sich in ihrer Farbe, ihrer Form, ihrer Kontur und/oder durch maschinenlesbare Bestandteile wie beispielsweise durch Strichcodes unterscheiden, als eindeutige Kommissionierauftragskennungen dienen. Ebenso ist es im Rahmen der Erfindung möglich, dass für eine eindeutige Kommissionierauftragskennung auch mehrere unterschiedliche charakteristische Kennzeichen bzw. Merkmale miteinander kombiniert sind. So ist es beispielsweise möglich, eindeutige, verwechslungssichere Kommissionierauftragskennungen zu verwenden, die sich sowohl in der Farbwahl, als auch in der Wahl ihrer Form bzw. Kontur voneinander unterscheiden. Vorzugsweise erfolgt die Auswahl bzw. Erstellung der eindeutigen Kommissionierauftragskennungen durch Berechnung vom Zentralrechner aus.

Im Rahmen der Erfindung wird auch ein Arbeitsplatz zum manuellen Kommissionieren von Produkten in einem Kommissionierbereich, insbesondere von Speise- und Getränkeprodukten in einem Produktionsbereich eines Restaurants, gemäß einem Kommissionierauftrag durch zumindest eine Kommissionierperson angegeben, wobei der Arbeitsplatz aufweist:
- einen Kommissionierbereich umfassend
- mehrere Entnahmeplätze für Produkte, wobei die Entnahmeplätze wahlweise vordefiniert für jeweils ein bestimmtes Produkt und/oder belegungsabhängig für mehrere unterschiedliche Produkte ausgeführt sein können;
- mehrere Kommissionierzielgebinde zum Ablegen der jeweils für einen Kommissionierauftrag bestellten Produkte;
- einen Zentralrechner zum Erfassen der Bestelldaten sämtlicher Produkte eines Kommissionierauftrags;
- zumindest eine tragbare Datenverarbeitungseinheit, welche
   Datenverarbeitungseinheit am Körper der zumindest einen Kommissionierperson getragen wird;
- eine Übertragungseinheit zum Übertragen von Bestelldaten eines Kommissionierauftrags vom Zentralrechner an die zumindest eine Datenverarbeitungseinheit;
- eine Einheit zur Zuordnung einer eindeutigen Kommissionierauftragskennung zu den bestellten Produkten des jeweiligen Kommissionierauftrags anhand der Bestelldaten des Zentralrechners;
- eine Einheit zum maschinellen Identifizieren der bestellten Produkte an einem Entnahmeplatz anhand von voreingestellten Produktdaten und/oder von Standortdaten und/oder von Bestelldaten des Zentralrechners;
- eine Einheit der tragbaren Datenverarbeitungseinheit zum visuellen Markieren der bestellten Produkte durch Überlagerung der Produkte mit der Kommissionierauftragskennung des jeweiligen Kommissionierauftrags; sowie
- eine Einheit zum visuellen Markieren eines dem jeweiligen Kommissionierauftrag zugewiesenen Kommissionierzielgebindes.

Vorzugsweise wird bei einem erfindungsgemäßen Arbeitsplatz zum manuellen Kommissionieren eine Datenbrille als tragbare Datenverarbeitungseinheit verwendet. Die maschinelle Identifizierung der bestellten Produkte kann vollständig durch die tragbare Datenverarbeitungseinheit, vorzugsweise durch die Datenbrille, welche jede Kommissionierperson am Körper trägt, erfolgen. Ebenso ist es im Rahmen der Erfindung möglich, dass die maschinelle Identifizierung der Produkte verteilt bzw. kombiniert sowohl durch die tragbaren Datenverarbeitungseinheiten, als auch durch den Zentralrechner erfolgt.

Besonders vorteilhaft sind bei einem erfindungsgemäßen Arbeitsplatz zum manuellen Kommissionieren eine Prüfeinheit zur Überprüfung der Bestelldaten der bestellten Produkte sowie eine Anzeigeeinheit zur Anzeige des fertigen Kommissionierauftrags vorgesehen. In dieser Ausführung ist ein erfindungsgemäßer Arbeitsplatz mit einer Prüfeinheit zur Überprüfung eines Kommissionierauftrags ausgestattet. Mögliche Fehler, welche während des Kommissionierens insbesondere von mehreren parallel bearbeiteten Kommissionieraufträgen passieren, werden somit zuverlässig von der Prüfeinheit erkannt. Weiters steht bei einem solchen erfindungsgemäßen Arbeitsplatz auch eine Anzeigeeinheit zur Anzeige des fertigen Kommissionierauftrags zur Verfügung. Somit wird ein Kommissionierauftrag erst dann zur Auslieferung an den Kunden frei gegeben, wenn der Kommissionierauftrag entsprechend überprüft und als fehlerfrei erkannt wurde.

Weitere Einzelheiten, Merkmale und Vorteile der Erfindung ergeben sich aus der nachfolgenden Erläuterung eines in den Zeichnungen schematisch dargestellten Ausführungsbeispiels. In den Zeichnungen zeigen:
- Fig. 1 in einem Fließbild einen Ablauf einer Ausführungsvariante eines erfindungsgemäßen Kommissionierverfahrens unter Einsatz von tragbaren Datenverarbeitungseinheiten;
- Fig. 2 eine Detailansicht von vordefinierten Entnahmeplätzen zur Entnahme festgelegter bestellter Produkte;
- Fig. 3 eine Detailansicht von belegungsabhängigen Entnahmeplätzen zur Entnahme unterschiedlicher bestellter Produkte;
- Fig. 4 eine Weiterbildung eines erfindungsgemäßen Kommissionierverfahrens unter Einsatz einer tragbaren Datenverarbeitungseinheit sowie von Handerkennungseinrichtungen.

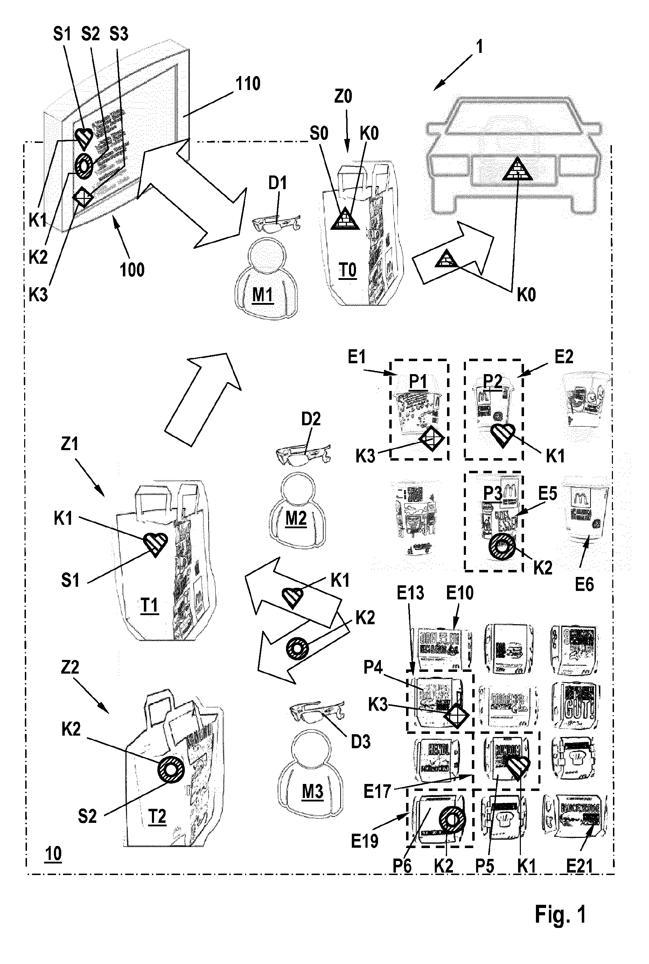

Fig. 1 veranschaulicht schematisch stark vereinfacht einen Arbeitsplatz zum manuellen Kommissionieren von Produkten P1-P6 in einem Kommissionierbereich 10, insbesondere von Speise- und Getränkeprodukten in einem Produktionsbereich eines Restaurants, gemäß einem Kommissionierauftrag K1-K3 durch zumindest eine Kommissionierperson M1-M3. Der Arbeitsplatz, welcher zum manuellen Kommissionieren ausgerüstet ist, weist dazu einen Kommissionierbereich 10 auf, welcher mehrere Entnahmeplätze E1-E21 für Produkte P1-P6 umfasst, wobei die Entnahmeplätze E10-E21 vordefiniert für jeweils ein bestimmtes Produkt P4-P6 ausgeführt sein können. Alternativ oder in Ergänzung dazu können auch belegungsabhängige Entnahmeplätze E1-E6 für mehrere unterschiedliche Produkte P1-P3 ausgeführt sein. Wie in Fig. 1 veranschaulicht sind hier die belegungsabhängigen Entnahmeplätze E1-E6 an einem Getränkeautomaten zum Abfüllen von Getränken bzw. von Produkten P1-P6 vorgesehen. Je nach Kommissionierauftrag K1-K3 können somit beispielsweise an ein und demselben belegungsabhängigen Entnahmeplatz E1 hintereinander gleiche oder unterschiedliche Getränkesorten in Getränkebecher gefüllt werden. Die Zuordnung, welches Getränk zu welchem Kommissionierauftrag gehörig ist, erfolgt anhand von Bestelldaten, welche zu Beginn des Bestellvorgangs von einer Kommissionierperson M1 in einen Zentralrechner 100 eingegeben werden. Die Entnahmeplätze E10-E21 sind hier wahlweise vordefiniert für jeweils ein bestimmtes Produkt P4-P6, beispielsweise für bereits verpackte Speisen.

Weiters sind in Fig. 1 mehrere Kommissionierzielgebinde Z1, Z2 zum Ablegen der jeweils für einen Kommissionierauftrag K1-K3 bestellten Produkte P1-P6 vorgesehen. Je nach Anforderung können die Kommissionierzielgebinde Z1, Z2 an bestimmten, vordefinierten Ablageplätzen innerhalb des Kommissionierbereichs 10 während des Kommissioniervorgangs abgestellt werden, um die entsprechenden bestellten Produkte in die Kommissionierzielgebinde Z1, Z2 ablegen zu können. Ebenso ist es im Rahmen des erfindungsgemäßen Kommissionierverfahrens möglich, dass die Kommissionierzielgebinde Z1, Z2 von einer oder von mehreren Kommissionierpersonen M1-M3 während des Kommissioniervorgangs mitgenommen bzw. getragen werden, um auf möglichst kurzem Weg die entsprechenden bestellten Produkte darin ablegen zu können. Als Kommissionierzielgebinde Z1, Z2 werden hier jeweils Tragtaschen T1, T2 verwendet.

Ein Zentralrechner 100 dient zum Erfassen der Bestelldaten sämtlicher Produkte P2, P5 eines Kommissionierauftrags K1. Weiters sind hier bei einem Arbeitsplatz zum Abarbeiten eines erfindungsgemäßen Kommissionierverfahrens 1 mehrere tragbare Datenverarbeitungseinheiten D1-D3 im Einsatz, welche Datenverarbeitungseinheiten D1-D3 jeweils am Körper einer Kommissionierperson M1-M3 getragen werden. Mittels einer Übertragungseinheit werden Bestelldaten eines Kommissionierauftrags K1-K3 vom Zentralrechner 100 an die Datenverarbeitungseinheiten D1-D3 übertragen. Weiters ist eine Einheit zur Zuordnung einer eindeutigen Kommissionierauftragskennung S 1-S3 zu den bestellten Produkten P1-P6 des jeweiligen Kommissionierauftrags K1-K3 vorgesehen, wobei die Zuordnung der Kommissionierauftragskennung S 1-S3 anhand der Bestelldaten des Zentralrechners 100 erfolgt. Außerdem umfasst ein solcher Arbeitsplatz eine Einheit zum maschinellen Identifizieren der bestellten Produkte P1-P6 an einem Entnahmeplatz E1-E21 durch die Datenverarbeitungseinheit D1-D3 anhand von voreingestellten Produktdaten bzw. von Standortdaten sowie anhand von Bestelldaten des Zentralrechners 100.

Als tragbare Datenverarbeitungseinheiten D1-D3 werden hier jeweils Datenbrillen D1-D3 verwendet. Eine Einheit der tragbaren Datenverarbeitungseinheit D1-D3 dient dabei zum visuellen Markieren der bestellten Produkte P1-P6 durch Überlagerung der Produkte mit der Kommissionierauftragskennung S1-S3 des jeweiligen Kommissionierauftrags K1-K3. Weiters ist eine Einheit zum visuellen Markieren eines dem jeweiligen Kommissionierauftrag K1-K3 zugewiesenen Kommissionierzielgebindes Z1, Z2 vorgesehen. Der hier in Fig. 1 veranschaulichte Arbeitsplatz weist außerdem noch eine Prüfeinheit zur Überprüfung der Bestelldaten der bestellten Produkte P1-P6 auf. Weiters ist eine Anzeigeeinheit 110 zur Anzeige der Kommissionieraufträge K1-K3 vorgesehen.

Nun wird anhand von Fig. 1 der Ablauf einer ersten Ausführung eines erfindungsgemäßen Kommissionierverfahrens 1 erklärt.

Innerhalb des Kommissionierbereichs 10, beispielsweise eines Produktionsbereichs zur Herstellung bzw. Zubereitung von Speise- und Getränkeprodukten in einem Schnellrestaurant, befinden sich mehrere Kommissionierperson M1, M2, M3, welche jeweils mit einer am Körper tragbaren Datenverarbeitungseinheit D1, D2, D3 ausgestattet sind. Als Datenverarbeitungseinheiten D1-D3 werden hier jeweils Datenbrillen D1-D3 von den Kommissionierpersonen M1-M3 getragen. Von einer Kommissionierperson M1 werden die Bestelldaten sämtlicher bestellter Produkte P2, P5 eines ersten Kommissionierauftrags K1 in einem Zentralrechner 100 erfasst. Anschließend werden die Bestelldaten des ersten Kommissionierauftrags K1 vom Zentralrechner 100 an die Datenverarbeitungseinheiten D1-D3 übertragen. Die Zuordnung einer eindeutigen Kommissionierauftragskennung S1 zu den bestellten Produkten P2, P5 des ersten Kommissionierauftrags K1 erfolgt dabei anhand der Bestelldaten des Zentralrechners 100.

Durch die Datenverarbeitungseinheiten D1-D3 werden die bestellten Produkte P2, P5 des ersten Kommissionierauftrags K1 an einem Entnahmeplatz E2 innerhalb des Kommissionierbereichs 10 anhand von voreingestellten Produktdaten und/oder von Bestelldaten des Zentralrechners 100 maschinell identifiziert. Anschließend erfolgt ein visuelles Markieren der bestellten Produkte P2, P5 des ersten Kommissionierauftrags K1 durch Überlagerung der bestellten Produkte P2, P5 mit der Kommissionierauftragskennung S1 des ersten Kommissionierauftrags K1 durch die Datenverarbeitungseinheit D1-D3.

Parallel dazu werden hier bereits Bestelldaten eines zweiten Kommissionierauftrags K2, welcher die bestellten Produkte P3, P6 umfasst, sowie eines dritten Kommissionierauftrags K3, welcher die bestellten Produkte P1, P4 umfasst, ebenfalls an die Datenverarbeitungseinheiten D1-D3 übermittelt. Die bestellten Produkte P3, P6 des zweiten Kommissionierauftrags K2 werden durch Überlagerung mit der Kommissionierauftragskennung S2 des zweiten Kommissionierauftrags K2 durch die Datenverarbeitungseinheit D1-D3 visuell markiert. Ebenso werden die bestellten Produkte P1, P4 des dritten Kommissionierauftrags K3 durch Überlagerung mit der eindeutigen Kommissionierauftragskennung S3 des dritten Kommissionierauftrags K3 durch die Datenverarbeitungseinheit D1-D3 visuell markiert.

Ein dem ersten Kommissionierauftrag K1 zugewiesenes Kommissionierzielgebinde Z1, in dem die visuell markierten bestellten Produkte P2, P5 von den Kommissionierpersonen M1-M3 abzulegen sind, wird mit der eindeutigen Kommissionierauftragskennung S1 des ersten Kommissionierauftrags K1 durch die Datenverarbeitungseinheiten D1-D3 und/oder durch eine mit dem Zentralrechner 100 gekoppelte Markierungseinheit visuell markiert. Als Kommissionierzielgebinde Z1 wird hier eine Tragtasche T1 verwendet, in welche die bestellten Produkte P2, P5 des ersten Kommissionierauftrags K1 abgelegt werden. Auf der Tragtasche T1 ist hier ebenfalls die eindeutige Kommissionierauftragskennung S1 des ersten Kommissionierauftrags K1 visuell markiert.

Ebenso wird ein dem zweiten Kommissionierauftrag K2 zugewiesenes Kommissionierzielgebinde Z2 innerhalb des Kommissionierbereichs 10 mit der eindeutigen Kommissionierauftragskennung S2 des zweiten Kommissionierauftrags K2 visuell markiert. Die mit derselben eindeutigen Kommissionierauftragskennung S2 visuell markierten bestellten Produkte P3, P6, die dem zweiten Kommissionierauftrag K2 zugeordnet sind, werden von den Kommissionierpersonen M1-M3 in einem Kommissionierzielgebinde Z2 abgelegt. Als Kommissionierzielgebinde Z2 dient hier ebenfalls eine Tragtasche T2, welche von einer oder von mehreren Kommissionierpersonen M1-M3 jeweils beim Einsammeln der bestellten Produkte P3, P6mitgetragen wird. Die visuelle Markierung erfolgt ebenfalls durch die Datenverarbeitungseinheiten D1-D3 und/oder durch eine mit dem Zentralrechner 100 gekoppelte Markierungseinheit.

Eine Markierungseinheit, beispielsweise ein Drucker oder eine Etikettiervorrichtung, mit der die entsprechenden Kommissionierauftragskennungen zum Kennzeichnen der jeweils einem Kommissionierauftrag zugeordneten Kommissionierzielgebinde angefertigt werden, ist der besseren Übersicht wegen in den Abbildungen nicht explizit dargestellt. Als Markierungseinheit können im Rahmen der Erfindung beliebige Drucker und/oder Etikettiervorrichtungen wie beispielsweise Barcode-Drucker verwendet werden. Die Kommissionierauftragskennungen können dazu sowohl direkt auf die Kommissionierzielgebinde, beispielsweise Tragtaschen oder Verpackungsgebinde, aufgedruckt werden. Ebenso können die Kommissionierauftragskennungen mittels entsprechender Etiketten auf die jeweils zugeordneten Kommissionierzielgebinde aufgebracht werden.

Während der Zuteilung der bestellten Produkte zu den jeweiligen Kommissionieraufträgen K1 bzw. K2 werden die Bestellungen im jeweiligen Kommissionierzielgebinde Z1 bzw. Z2 gegebenenfalls nochmals geprüft. Dazu werden beispielsweise im Falle des ersten Kommissionierauftrags K1 die Bestelldaten der bestellten Produkte P2, P5 durch die tragbare Datenverarbeitungseinheit D1 und/oder den Zentralrechner 100 überprüft. Im Falle einer richtigen Zuordnung und Ablage der bestellten Produkte P2, P5 im zugewiesenen Kommissionierzielgebinde Z1 werden erforderlichenfalls die Verfahrensschritte des maschinellen Identifizierens weiterer bestellter Produkte des laufenden Kommissionierauftrags K1, des visuellen Markierens weiterer bestellter Produkte, des visuellen Markierens eines dem jeweiligen Kommissionierauftrag K1 zugewiesenen Kommissionierzielgebindes Z1 sowie des Ablegens der weiteren bestellten Produkte P2, P5 im zugewiesenen Kommissionierzielgebinde Z1 durch eine Kommissionierperson M1-M3 entsprechend wiederholt.

Im Falle einer falschen Zuordnung und/oder einer falschen Ablage eines bestellten Produkts in einem falschen Kommissionierzielgebinde wird eine Fehlermeldung an die Datenverarbeitungseinheiten D1-D3 gesendet und/oder es erfolgt eine visuelle Markierung des falsch zugeordneten Produkts und/oder es erfolgt eine visuelle Markierung des falschen Kommissionierzielgebindes durch die Datenverarbeitungseinheit D1-D3 und/oder durch die mit dem Zentralrechner 100 gekoppelte Anzeigeeinheit 110.

Ebenso ist es im Rahmen der Erfindung möglich, dass eine Überprüfung der Bestellungen nur stichprobenartig erfolgt. Weiters ist es im Rahmen eines erfindungsgemäßen Kommissionierverfahrens möglich, dass ausschließlich eine bestimmte oder auch mehrere bestimmte Kommissionierpersonen, beispielsweise besonders erfahrene Kommissionierpersonen, für die Überprüfung der Bestellungen zuständig ist bzw. sind.

Sobald ein Kommissionierauftrag K1 bzw. K2 abgeschlossen ist, werden die Bestellgebinde bzw. Tragtaschen T1 bzw. T2 an die jeweils in ihren Fahrzeugen wartenden entsprechenden Kunden ausgehändigt. Dies wird hier von der Kommissionierperson M1 durchgeführt.

Wie in Fig. 1 dargestellt ist, wird von der Kommissionierperson M1 ein soeben abgeschlossener Kommissionierauftrag K0 an den entsprechenden Kunden ausgehändigt. Dazu ist als Kommissionierzielgebinde Z1 eineTragtasche T0 mit der Kommissionierauftragskennung S0 des bereits abgeschlossenen Kommissionierauftrags K0 visuell markiert. Die entsprechende visuelle Markierung erfolgt abermals mittels Datenbrille D1, die von der Kommissionierperson M1 getragen wird.

Das erfindungsgemäße Kommissionierverfahren ist keineswegs auf die in Fig. 1 dargestellte Konfiguration beschränkt. Es können im Rahmen der Erfindung auch Kommissionierverfahren mit einer Vielzahl an Kommissionierpersonen, Produkten und/oder Kommissionierzielgebinden durchgeführt werden. Ebenso ist es beim erfindungsgemäßen Kommissionierverfahren möglich, Kommissionieraufträge sowohl seriell, als auch parallel abzuarbeiten.

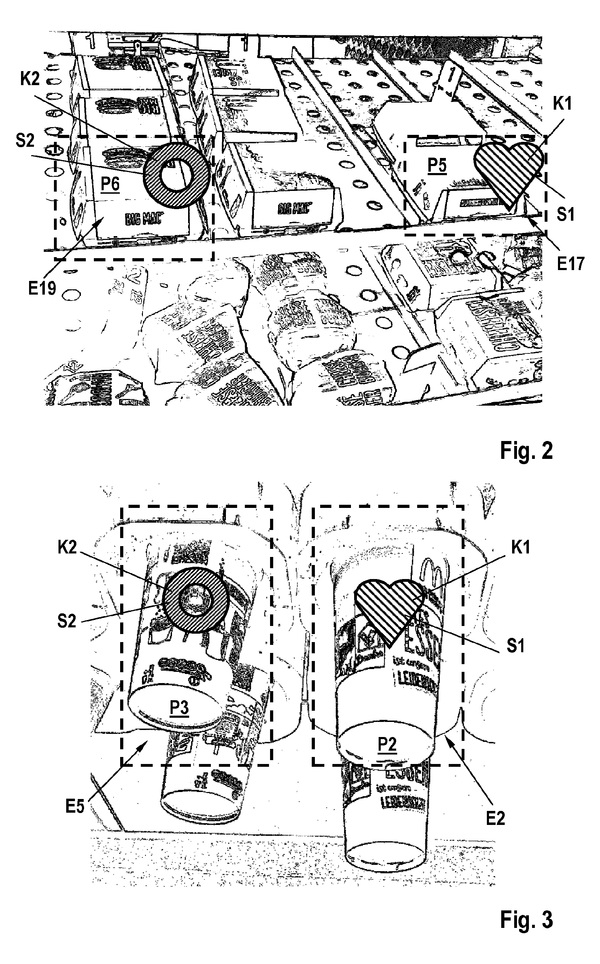

Fig. 2 stellt in einer Detailansicht vordefinierte Entnahmeplätze zur Entnahme festgelegter bestellter Produkte innerhalb des Kommissionierbereichs 10 in einem Schnellrestaurant dar. Als Produkte P5, P6 werden hier beispielsweise verpackte Speisen gezeigt, welche sich an vordefinierten Entnahmeplätzen in entsprechenden Schütten bzw. Fächern innerhalb des in Fig. 1 veranschaulichten Kommissionierbereichs 10 befinden. Ein bestelltes Produkt P5, welches sich am Entnahmeplatz E17 befindet, ist einem ersten Kommissionierauftrag K1 zugeordnet. Um das Kommissionieren zu erleichtern, wird dazu von den Datenbrillen D1-D3 jeweils eine eindeutige Kommissionierauftragskennung S1 - hier beispielsweise in Herzform - die dem ersten Kommissionierauftrag K1 zugeordnet ist, auf das verpackte Produkt P5 projiziert. Ebenso wird ein bestelltes Produkt P6, welches sich am Entnahmeplatz E19 befindet, einem zweiten Kommissionierauftrag K2 zugeordnet. Von den Datenbrillen D1-D3 wird jeweils eine eindeutige Kommissionierauftragskennung S2 - hier beispielsweise in Kreisringform - die dem zweiten Kommissionierauftrag K2 zugeordnet ist, auf das verpackte Produkt P6 projiziert.

Fig. 3 zeigt eine Detailansicht von belegungsabhängigen Entnahmeplätzen zur Entnahme unterschiedlicher bestellter Produkte. Die belegungsabhängigen Entnahmeplätze befinden sich beispielsweise an einem Getränkeautomaten. Als Produkte P2, P3 werden hier beispielsweise Getränkebecher gezeigt, welche sich an den belegungsabhängigen Entnahmeplätzen E2 bzw. E5 innerhalb des in Fig. 1 veranschaulichten Kommissionierbereichs 10 befinden. Vom Zentralrechner 100 wird ein Produkt P2, beispielsweise ein Getränk einer ersten bestimmten Getränkesorte, welche erste Getränkesorte am Entnahmeplatz E2 abgefüllt wird, einem ersten Kommissionierauftrag K1 zugeordnet. Die Bestelldaten bzw. die Belegungsdaten der belegungsabhängigen Entnahmeplätze E2 bzw. E5 werden dazu vom Zentralrechner 100 mittels drahtloser Datenübertragung an die Datenbrillen D1-D3 übertragen. Um das Kommissionieren zu erleichtern, wird von den Datenbrillen D1-D3 jeweils eine eindeutige Kommissionierauftragskennung S1 - hier beispielsweise in Herzform - die dem ersten Kommissionierauftrag K1 zugeordnet ist, auf den Getränkebecher mit dem darin befindlichen Produkt P2 projiziert. Ebenso wird ein Getränkebecher mit einem Produkt P3, beispielsweise ein Getränk einer zweiten bestimmten Getränkesorte, welche zweite Getränkesorte am Entnahmeplatz E5 abgefüllt wird, einem zweiten Kommissionierauftrag K2 zugeordnet. Von den Datenbrillen D1-D3 wird wiederum jeweils eine eindeutige Kommissionierauftragskennung S2 - hier beispielsweise in Kreisringform - die dem zweiten Kommissionierauftrag K2 zugeordnet ist, auf den Getränkebecher mit dem darin befindlichen Produkt P3 projiziert. Somit wird erreicht, dass äußerlich gleiche Getränkebecher, die mit unterschiedlichen Getränken bzw. Produkten befüllt sind, eindeutig und ohne Verwechslungen dem jeweiligen Kommissionierauftrag zugeordnet werden können.

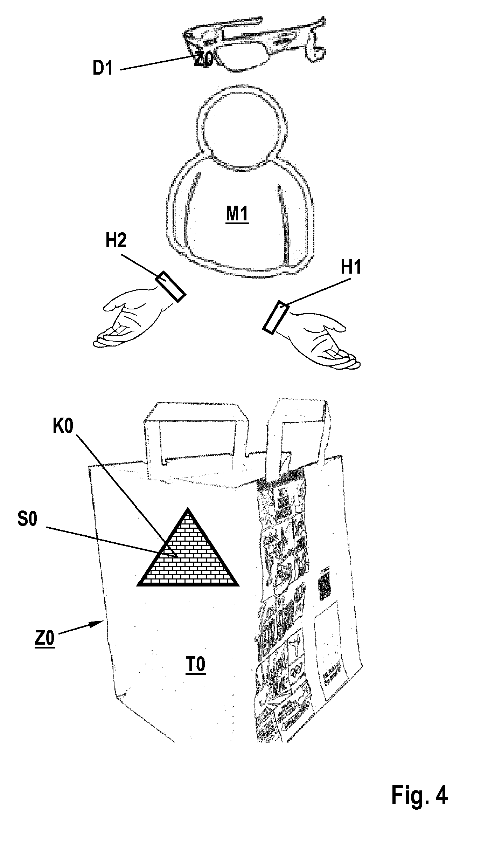

Fig. 4 zeigt eine Weiterbildung eines erfindungsgemäßen Kommissionierverfahrens, bei dem sowohl eine tragbare Datenverarbeitungseinheit D1, als auch Handerkennungseinrichtungen H1, H2 eingesetzt werden. Die Handerkennungseinrichtungen H1, H2 sind hier jeweils an den Handgelenken zumindest einer Kommissionierperson M1-M3 befestigt. Beim Ergreifen eines einem Kommissionierauftrag K0 zugeordneten, visuell markierten bestellten Produkts am entsprechenden Entnahmeplatz durch eine Kommissionierperson M1 wird von einer Lageerkennungseinrichtung, welche mit dem Zentralrechner 100 gekoppelt, die Lage der Handerkennungseinrichtungen H1, H2 an den Handgelenken der Kommissionierperson M1 relativ zum Entnahmeplatz des entnommenen Produkts erkannt.

Zusätzlich oder alternativ dazu wird beim Ablegen des von der Kommissionierperson M1 ergriffenen Produkts in dem entsprechend zugewiesenen Kommissionierzielgebinde anhand der Lage der Handerkennungseinrichtungen H1, H2 relativ zum Kommissionierzielgebinde eine Überprüfung des Kommissionierzielgebindes jedes bestellten Produkts ermöglicht. Wie in Fig. 4 gezeigt ist, werden hier die ausgewählten bzw. visuell markierten Produkte in ein Kommissionierzielgebinde Z0, beispielsweise eine Tragtasche T0, welche sich hier an einem dem Kommissionierauftrag K0 zugeordneten Ablageplatz befindet, abgelegt. Ebenso können die Kommissionierzielgebinde während des Kommissionierens der bestellten Produkte auch von den Kommissionierpersonen innerhalb des Kommissionierbereichs 10 mitgetragen werden. Es wird somit beim Ablegen der ergriffenen Produkte die Lage der Handerkennungseinrichtungen H1, H2 relativ zum relativ zum Kommissionierzielgebinde Z0, der Tragtasche T0, erkannt.

Die Handerkennungseinrichtungen H1, H2 umfassen ein Sender-/Empfänger-System mit einem mobilen Datenspeicher, welcher mittels einer Funkverbindung berührungslos ausgelesen wird. Somit wird gewährleistet, dass das korrekte Ergreifen von bestellten Produkten am jeweils entsprechenden Entnahmeplatz und/oder das korrekte Ablegen der bestellten Produkte im jeweils zugewiesenen Kommissionierzielgebinde durch die Kommissionierpersonen für jeden Kommissionierauftrag auch anhand der Positionen der Handerkennungseinrichtungen überprüft werden kann.

Im Rahmen der Erfindung ist es auch möglich, dass nur eine Handerkennungseinrichtung H1, welche wahlweise am linken oder am rechten Handgelenk einer Kommissionierperson getragen wird, zur Überwachung der korrekten Entnahme von Produkten an den entsprechenden Entnahmeplätzen und/oder der korrekten Zuordnung von Produkten im entsprechenden Kommissionierzielgebinde dient.

### Liste der Positionszeichen:

- 1: Kommissionierverfahren
- 10: Kommissionierbereich
- 100: Zentralrechner
- 110: Anzeigeeinheit
- D1: tragbare Datenverarbeitungseinheit (bzw. D2, D3)
- E1: Entnahmeplatz (bzw. E2-E21)
- H1: Handerkennungseinrichtung (bzw. H2)
- K1: Kommissionierauftrag (bzw. K0, K2, K3)
- M1: Kommissionierperson (bzw. M2, M3)
- P1: Produkt (bzw. P2-P6)
- S1: Kommissionierauftragskennung (bzw. S0, S2, S3)
- T1: Tragtasche (bzw. T0, T2)
- Z1: Kommissionierzielgebinde (bzw. Z0, Z2)

## Patentansprüche

1. Verfahren (1) zum manuellen Kommissionieren von Produkten (P1-P6) in einem Kommissionierbereich (10), insbesondere von Speise- und Getränkeprodukten in einem Produktionsbereich eines Restaurants, gemäß einem Kommissionierauftrag (K0-K3), umfassend die folgenden Schritte:
- a - Ausrüsten zumindest einer Kommissionierperson (M1-M3) mit einer tragbaren Datenverarbeitungseinheit (D1-D3), welche Datenverarbeitungseinheit (D1-D3) am Körper der Kommissionierperson (M1-M3) getragen wird;
- b - Erfassen der Bestelldaten sämtlicher Produkte (P2, P5) eines ersten Kommissionierauftrags (K1) in einem Zentralrechner (100);
- c - Übertragen der Bestelldaten des ersten Kommissionierauftrags (K1) vom Zentralrechner (100) an die zumindest eine Datenverarbeitungseinheit (D1-D3);
- d - Zuordnen einer eindeutigen Kommissionierauftragskennung (S1) zu den bestellten Produkten (P2, P5) des ersten Kommissionierauftrags (K1) anhand der Bestelldaten des Zentralrechners (100);
- e - Maschinelles Identifizieren zumindest eines bestellten Produkts (P2, P5) des ersten Kommissionierauftrags (K1) an einem Entnahmeplatz (E2) innerhalb des Kommissionierbereichs (10) durch die Datenverarbeitungseinheit (D1-D3) gegebenenfalls gemeinsam mit dem Zentralrechner (100) anhand von voreingestellten Produktdaten und/oder von Standortdaten des Entnahmeplatzes (E2) und/oder von Bestelldaten des Zentralrechners (100);
- f - Visuelles Markieren zumindest eines bestellten Produkts (P2, P5) durch Überlagerung des bestellten Produkts (P2, P5) mit der Kommissionierauftragskennung (S1) des ersten Kommissionierauftrags (K1) durch die Datenverarbeitungseinheit (D1-D3);
- g - Visuelles Markieren zumindest eines dem ersten Kommissionierauftrag (K1) zugewiesenen Kommissionierzielgebindes (Z1) innerhalb des Kommissionierbereichs (10), in welchem Kommissionierzielgebinde (Z1) das zumindest eine visuell markierte bestellte Produkt (P2, P5) von der zumindest einen Kommissionierperson (M1-M3) abzulegen ist, mit derselben eindeutigen Kommissionierauftragskennung (S1) des ersten Kommissionierauftrags (K1) durch die Datenverarbeitungseinheit (D1-D3) und/oder durch eine mit dem Zentralrechner (100) gekoppelte Markierungsvorrichtung und/oder durch manuelles Anbringen der Kommissionierauftragskennung (S1) durch eine Kommissionierperson (M1-M3);
- h - Ablegen des zumindest einen bestellten Produkts (P2, P5) in dem zumindest einen Kommissionierzielgebinde (Z1) durch die Kommissionierperson (M1-M3);
- i - erforderlichenfalls Wiederholen der Verfahrensschritte - e - bis - h - für weitere bestellte Produkte (P2, P5) des ersten Kommissionierauftrags (K1) durch eine oder mehrere Kommissionierpersonen (M1-M3).

2. Verfahren (1) nach Anspruch 1, **dadurch gekennzeichnet, dass** die Bestelldaten der bestellten Produkte (P2, P5) durch die zumindest eine tragbare Datenverarbeitungseinheit (D1-D3) und/oder den Zentralrechner (100) überprüft werden, wobei
- im Falle einer richtigen Zuordnung und Ablage zumindest eines ersten bestellten Produkts (P2) im zugewiesenen Kommissionierzielgebinde (Z1) erforderlichenfalls die Verfahrensschritte des maschinellen Identifizierens weiterer bestellter Produkte (P2, P5) eines Kommissionierauftrags (K1), des visuellen Markierens weiterer bestellter Produkte (P2, P5), des visuellen Markierens eines dem jeweiligen Kommissionierauftrag (K1) zugewiesenen Kommissionierzielgebindes (Z1) sowie des Ablegens der weiteren bestellten Produkte (P2, P5) im zugewiesenen Kommissionierzielgebinde (Z1) durch eine Kommissionierperson (M1-M3) entsprechend wiederholt werden,
oder
- im Falle einer falschen Zuordnung und/oder falschen Ablage eines bestellten Produkts in einem falschen Kommissionierzielgebinde eine Fehlermeldung an die zumindest eine Datenverarbeitungseinheit (D1-D3) gesendet wird und/oder eine visuelle Markierung des falsch zugeordneten Produkts und/oder eine visuelle Markierung des falsch zugeordneten Kommissionierzielgebindes durch die Datenverarbeitungseinheit (D1-D3) und/oder die mit dem Zentralrechner (100) gekoppelte Anzeigeeinheit (110) erfolgt.

3. Verfahren (1) nach Anspruch 1 oder 2, **dadurch gekennzeichnet, dass**
- nach erfolgtem Ablegen sämtlicher bestellter Produkte (P2, P5) eines Kommissionierauftrags (K1) in einem zugewiesenen Kommissionierzielgebinde (Z1) der fertig abgearbeitete Kommissionierauftrag (K1) durch die tragbare Datenverarbeitungseinheit (D1-D3) und/oder die mit dem Zentralrechner (100) gekoppelte Anzeigeeinheit (110) angezeigt wird, worauf
- die im zugewiesenen Kommissionierzielgebinde (Z1) gesammelten bestellten Produkte (P2, P5) ausgegeben werden, und
- gegebenenfalls der abgeschlossene Kommissionierauftrag (K1) quittiert wird.

4. Verfahren (1) nach einem der Ansprüche 1 bis 3, **dadurch gekennzeichnet, dass** mehrere Kommissionieraufträge (K0-K3) zumindest teilweise parallel von zumindest einer Kommissionierperson (M1-M3) bearbeitet werden.

5. Verfahren (1) nach einem der vorigen Ansprüche, **dadurch gekennzeichnet, dass** von der tragbaren Datenverarbeitungseinheit (D1-D3) neben der Kommissionierauftragskennung (S1-S3) zusätzliche Navigationsinformationen zum jeweils identifizierten, bestellten Produkt (P1-P6) wie beispielsweise Informationen zur Priorität des jeweiligen Kommissionierauftrags (K1-K3), zur Packordnung des bestellten Produkts und/oder zur kürzesten Entfernung zum jeweiligen Entnahmeplatz (E1-E21) eines bestellten Produkts und/oder zur kürzesten Entfernung zum zugeordneten Kommissionierzielgebinde (Z1, Z2), angezeigt werden.

6. Verfahren (1) nach einem der vorigen Ansprüche, **dadurch gekennzeichnet, dass** von einer Kommissionierperson (M1-M3) als tragbare Datenverarbeitungseinheit (D1-D3) eine Datenbrille getragen wird, wobei von der Datenbrille jeweils eine Kommissionierauftragskennung (S0-S3) sowie gegebenenfalls zusätzliche Navigationsinformationen zu den bestellten Produkten in ein Sichtfeld der Kommissionierperson (M1-M3) projiziert wird bzw. werden.

7. Verfahren (1) nach Anspruch 6, **dadurch gekennzeichnet, dass** von der Datenbrille ein identifiziertes, bestelltes Produkt (P1-P6) durch Überlagerung mit der Kommissionierauftragskennung (S0-S3) des entsprechenden Kommissionierauftrags (K0-K3) markiert wird.

8. Verfahren (1) nach einem der vorigen Ansprüche, **dadurch gekennzeichnet, dass** von einer Kommissionierperson (M1-M3) als tragbare Datenverarbeitungseinheit (D1-D3) ein mobiles Computerendgerät, beispielsweise ein Tablet-Computer und/oder ein Smartphone, getragen wird bzw. werden, wobei vom mobilen Computerendgerät ein bestelltes Produkt (P1-P6) anhand eines Bildausschnitts identifiziert und mit einer Kommissionierauftragserkennung (S0-S3) markiert wird.

9. Verfahren (1) nach einem der vorigen Ansprüche, **dadurch gekennzeichnet, dass** eine Datenübertragung zwischen dem Zentralrechner (100) und der zumindest einen tragbaren Datenverarbeitungseinheit (D1-D3) kabellos erfolgt.

10. Verfahren (1) nach einem der vorigen Ansprüche, weiterhin umfassend zumindest eine Handerkennungseinrichtung (H1, H2), insbesondere zwei Handerkennungseinrichtungen (H1, H2), die an den Handgelenken zumindest einer Kommissionierperson (M1-M3) befestigt ist bzw. sind, **dadurch gekennzeichnet, dass** beim Ergreifen eines einem Kommissionierauftrag (K0-K3) zugeordneten, visuell markierten bestellten Produkts (P1-P6) am entsprechenden Entnahmeplatz (E1-E21) durch eine Kommissionierperson (M1-M3) von einer Lageerkennungseinrichtung, welche mit dem Zentralrechner (100) gekoppelt ist, die Lage der zumindest einen Handerkennungseinrichtung (H1, H2) an den Handgelenken der Kommissionierperson (M1-M3) relativ zum Entnahmeplatz (E1-E21) des entnommenen Produkts (P1-P6) erkannt wird und/oder beim Ablegen des Produkts an dem entsprechend zugewiesenen Kommissionierzielgebinde (Z1, Z2) anhand der Lage der zumindest einen Handerkennungseinrichtung (H1, H2) relativ zum Kommissionierzielgebinde (Z1, Z2) eine Überprüfung des Kommissionierzielgebindes (Z1, Z2) jedes bestellten Produkts (P1-P6) ermöglicht wird.

11. Verfahren (1) nach Anspruch 10, **dadurch gekennzeichnet, dass** jede Handerkennungseinrichtung (H1, H2) ein Sender-/Empfänger-System mit einem mobilen Datenspeicher umfasst, welcher mobile Datenspeicher mittels einer Funkverbindung berührungslos ausgelesen wird.

12. Verfahren (1) nach einem der vorigen Ansprüche, **dadurch gekennzeichnet, dass** zum maschinellen Identifizieren eines bestellten Produkts (P4-P6) an einem vordefinierten Entnahmeplatz (E10-E21) Produktdaten wie Form und/oder Farbe und/oder Muster und/oder Strichcodes einer Produktverpackung verwendet werden und/oder zum maschinellen Identifizieren eines bestellten Produkts (P1-P3) an einem belegungsabhängigen Entnahmeplatz (E1-E6), beispielsweise an einem Getränkeausgabeautomaten, die Produktdaten unterschiedlicher Produkte (P1-P3) anhand der Bestelldaten des Zentralrechners (100) ermittelt werden.

13. Verfahren (1) nach einem der vorigen Ansprüche, **dadurch gekennzeichnet, dass** eine für ein bestelltes Produkt (P1-P6) eindeutige Kommissionierauftragskennung (S0-S3) zumindest eines der folgenden charakteristischen Kennzeichen enthält:
- Farbe,
- Form,
- Kontur,
- Strichcode.

14. Arbeitsplatz zum manuellen Kommissionieren von Produkten (P1-P6) in einem Kommissionierbereich (10), insbesondere von Speise- und Getränkeprodukten in einem Produktionsbereich eines Restaurants, gemäß einem Kommissionierauftrag (K1-K3) durch zumindest eine Kommissionierperson (M1-M3), aufweisend:
- einen Kommissionierbereich (10) umfassend
- mehrere Entnahmeplätze (E1-E21) für Produkte (P1-P6), wobei die Entnahmeplätze (E10-E21) wahlweise vordefiniert für jeweils ein bestimmtes Produkt (P4-P6) und/oder belegungsabhängig (E1-E6) für mehrere unterschiedliche Produkte (P1-P3) ausgeführt sein können;
- mehrere Kommissionierzielgebinde (Z1, Z2) zum Ablegen der jeweils für einen Kommissionierauftrag (K1-K3) bestellten Produkte (P1-P6);
- einen Zentralrechner (100) zum Erfassen der Bestelldaten sämtlicher Produkte (P2, P5) eines Kommissionierauftrags (K1);
- zumindest eine tragbare Datenverarbeitungseinheit (D1-D3), welche Datenverarbeitungseinheit (D1-D3) am Körper der zumindest einen Kommissionierperson (M1-M3) getragen wird;
- eine Übertragungseinheit zum Übertragen von Bestelldaten eines Kommissionierauftrags (K1-K3) vom Zentralrechner (100) an die zumindest eine Datenverarbeitungseinheit (D1-D3);
- eine Einheit zur Zuordnung einer eindeutigen Kommissionierauftragskennung (S1-S3) zu den bestellten Produkten (P1-P6) des jeweiligen Kommissionierauftrags (K1-K3) anhand der Bestelldaten des Zentralrechners (100);
- eine Einheit zum maschinellen Identifizieren der bestellten Produkte (P1-P6) an einem Entnahmeplatz (E1-E21) anhand von voreingestellten Produktdaten und/oder von Standortdaten und/oder von Bestelldaten des Zentralrechners (100);
- eine Einheit der tragbaren Datenverarbeitungseinheit (D1-D3) zum visuellen Markieren der bestellten Produkte (P1-P6) durch Überlagerung der Produkte mit der Kommissionierauftragskennung (S1-S3) des jeweiligen Kommissionierauftrags (K1-K3); sowie
- eine Einheit zum visuellen Markieren eines dem jeweiligen Kommissionierauftrag (K1-K3) zugewiesenen Kommissionierzielgebindes (Z1, Z2).

15. Arbeitsplatz nach Anspruch 14, **dadurch gekennzeichnet, dass** eine Prüfeinheit zur Überprüfung der Bestelldaten der bestellten Produkte (P1-P6) und/oder der einem Kommissionierauftrag (K1-K3) zugewiesenen Kommissionierzielgebinde (Z1, Z2) sowie eine Anzeigeeinheit (110) zur Anzeige des fertigen Kommissionierauftrags (K1-K3) vorgesehen sind.
